Europäisches Patentamt

European Patent Office

Office européen des brevets

(11) Veröffentlichungsnummer: **0 512 294 A2**

# EUROPÄISCHE PATENTANMELDUNG

(21) Anmeldenummer: **92106600.7**

(22) Anmeldetag: **16.04.92**

(51) Int. Cl.⁵: **B29C 67/14**, //B29K67:00

(30) Priorität: **02.05.91 DE 4114249**

(43) Veröffentlichungstag der Anmeldung:
**11.11.92 Patentblatt 92/46**

(84) Benannte Vertragsstaaten:
**AT DE ES FR GB IT NL SE**

(71) Anmelder: **BASF Aktiengesellschaft**
**Carl-Bosch-Strasse 38**
**W-6700 Ludwigshafen(DE)**

(72) Erfinder: **Lorenz, Reinhard, Dr.**
**Chenoverstrasse 11**
**W-6703 Limburgerhof(DE)**
Erfinder: **Zwecker, Joachim, Dr.**
**Moltkestrasse 18**
**W-6940 Weinheim(DE)**

(54) **Verfahren zur Herstellung von schwundfreien Formteilen aus ungesättigten Polyesterharzen.**

(57) Die Erfindung betrifft die Herstellung von schwundfreien Formteilen aus faserverstärkten ungesättigten Polyesterharzen nach dem Reaktions-Injektions(RTM)-Verfahren, wobei das Reaktionsharz 5 bis 50 Gew.-% eines gesättigten Polyesters enthält.

Rank Xerox (UK) Business Services

Die Erfindung betrifft ein Verfahren zur Herstellung von schwundfreien Formteilen aus ungesättigten Polyesterharzen, die ohne Nacharbeit lackiert werden können.

Das Resin-Transfer-Molding(RTM)-Verfahren zur Herstellung großflächiger Formteile aus faserverstärkten ungesättigten Polyesterharzen ist bekannt, z.B. aus EP-B 19 149. Dabei werden in eine beheizbare Werkzeugform Fasermatten oder -gelege eingelegt, die Form wird geschlossen und flüssiges, initiatorhaltiges Reaktionsharz wird eingespritzt. Danach wird die Vernetzung des Harzes durch Erwärmen auf 40 bis 90°C eingeleitet, und nach Beendigung der Vernetzung wird das fertige Formteil aus der Form entnommen. In der EP-B 19 149 wird auch erwähnt, daß es bei der Verarbeitung von Reaktionsharzen nach dem Sheet-Molding-Compound(SMC)- und Bulk-Molding-Compound(BMC)-Verfahren üblich ist, zur Verbesserung der Oberflächeneigenschaften und der Lackierbarkeit der Formteile thermoplastische Kunststoffe als Niedrigschrumpf-Komponenten zuzusetzen, daß aber bei dem RTM-Verfahren zu diesem Zweck mit Vorteil eine andere Arbeitsweise angewandt werden soll, nämlich das nachträgliche Einspritzen von weiterem Reaktionharz in die Form, wenn die Hauptmenge des Harzes bereits geliert ist und ein Schrumpfen beginnt. Dieses Verfahren ist aber recht umständlich und erfordert aufwendige apparative Vorkehrungen.

Übliche Niedrigschrumpf-Komponenten, wie Polystyrol und Polymethylmethacrylat sind für das RTM-Verfahren nicht geeignet, weil ihre styrolische Lösung mit dem Polyesterharz nicht verträglich ist und die gebildete Dispersion wegen der verhältnismäßig niedrigen Viskosität des Harzes sich entmischt. Polyvinylacetat ist im Polyesterharz zwar löslich, eine ausreichende Schwundkompensation wird hier aber erst bei verhältnismäßig hohen Härtungstemperaturen oberhalb von etwa 80°C erhalten.

In der EP-A 171 591 (CA-A 1 241 141) sind lagerfähige, schwundarm härtbare ungesättigte Polyesterharze beschrieben, die als schwundmindernden Zusatz gesättigte Polyester, sowie zusätzlich noch einen verträglichen Thermoplasten aus der Reihe Celluloseester, Polymethylmethacrylat und Polyvinylacetat enthalten. Diese Polyesterharze werden wieder nach dem SMC- bzw. dem BMC-Verfahren verarbeitet. Diese Verfahren unterscheiden sich von dem RTM-Verfahren grundsätzlich dadurch, daß hier die Vernetzung bei wesentlich höheren Temperaturen, z.B. bei 120°C bis 160°C durchgeführt wird und daß den Harzen verhältnismäßig hohe Füllstoffanteile, meist über 200 Gew.-%, zugesetzt werden. Derart hohe Füllstoffgehalte sind aber bei dem RTM-Verfahren nicht zulässig, da sie zu einer viel zu hohen Harzviskosität führen würden.

Auch in US-A 3 909 489 und DE-A 2 408 ,524 (US-A 3 923 927) sind SMC-Formmassen mit geringem Schrumpf beschrieben, die zur Verbesserung der Oberflächeneigenschaften gesättigte Polyester mit Säurezahlen von weniger als 10 zugesetzt enthalten. Gesättigte Polyester mit derart niedrigen Säurezahlen sind aufwendig herzustellen, sie sind bei der SMC-Verarbeitung wegen des kritischen Eindick-Prozesses notwendig, nicht aber beim RTM-Verfahren.

Der Erfindung lag nun die Aufgabe zugrunde, ungesättigte Polyesterharze für das RTM-Verfahren bereitzustellen, welche nach der Aushärtung Formteile mit hohem Oberflächenglanz, guter Lackierbarkeit und ausreichender Zähigkeit ergeben. Darüberhinaus sollten die Formteile einen niedrigen Reststyrolgehalt aufweisen.

Diese Aufgabe wird bei dem erfindungsgemäßen Verfahren dadurch gelöst, daß das ungesättigte Polyesterharz 5 bis 50, vorzugsweise 10 bis 25 Gew.-% eines linearen, gesättigten Polyesters enthält.

Das RTM-Verfahren und die dabei verwendeten Apparaturen sind an sich bekannt und z.B. in der EP-B 19 149 ausführlich beschrieben. Dort sind auch die (vorzugsweise in Mengen von 15 bis 50 Gew.-%, bezogen auf das Formteil) einzusetzenden Verstärkungsfasern beschrieben.

Das Reaktionsharz hat vorzugsweise folgende Zusammensetzung:

30 bis 50 Gew.-% eines ungesättigten Polyesters,
25 bis 60 Gew.-% Styrol,
5 bis 50 Gew.-% des gesättigten Polyesters.

Bis zu 50 Gew.-% des Styrols können durch andere Monomere, wie z.B. Acrylate, Methacrylate, Di- und Tri(meth)-acrylate oder Divinylbenzol ersetzt sein.

Geeignete ungesättigte Polyester sind die üblichen Polykondensationsprodukte aus einer ungesättigten Dicarbonsäure, bevorzugt Maleinsäure, gegebenenfalls zusammen mit einer gesättigten Dicarbonsäure einerseits und einem Diol oder mehreren Diolen andererseits.

Bevorzugte ungesättigte Polyester für das RTM-Verfahren sind aus folgenden Molekülbausteinen aufgebaut:

50 bis 90 mol-% Maleinsäure,
50 bis 10 mol-% Phthalsäure, Terephthalsäure, Isophthalsäure oder Tetrahydrophthalsäure,
0 bis 20 mol-% anderer Di-, Tri- oder Tetracarbonsäuren
und
50 bis 100 mol-% Propylenglykol und/oder Neopentylglykol,

2

EP 0 512 294 A2

50 bis 0 mol-%    Ethylenglykol und/oder Diethylenglykol und/oder Dipropylenglykol,

0 bis 20 mol-%    anderer Diole, Triole oder Tetraole.

Die Säurezahl der ungesättige Polyester liegt vorzugsweise zwischen 15 und 50 mg KOH pro g Polymer, ihr mittleres Molekulargewicht (Zahlenmittel) zwischen 500 und 5000 g/mol.

Geeignete gesättigte Polyester sind Polykondensationsprodukte von gesättigten, aliphatischen und/oder aromatischen Dicarbonsäuren mit Diolen. Die Säurezahl der gesättigten Polyester sollte zwischen 10 und 100, vorzugsweise zwischen 15 und 50 liegen, ihr mittleres Molekulargewicht (Zahlenmittel) zwischen 500 und 20 000, vorzugsweise zwischen 1 000 und 5 000.

Bevorzugte gesättigte lineare Polyester sind aus folgenden Molekülbausteinen aufgebaut:

0 bis 100 mol-%    Adipinsäure,

100 bis 0 mol-%    Phthalsäure, Terephthalsäure, Isophthalsäure und/oder Tetrahydrophthalsäure,

0 bis 20 mol-%    anderer Di- und Tricarbonsäuren

und

80 bis 100 mol-%    eines Diols mit mehr als 3 Kohlenstoffatomen und

20 bis 0 mol-%    Ethylenglykol und/oder Propylenglykol.

Geeignete Diole mit mehr als 3 Kohlenstoffatomen sind z.B. 1,4-Butandiol, Diethylenglykol, Neopentylglykol, 1,5-Pentandiol, 1,6-Hexandiol, Dipropylenglykol, 1,4-Cyclohexandimethanol, Tricyclodecandimethanol und Hydroxypivalinsäureneopentylglykolester, sowie Gemische solcher Diole.

Besonders bevorzugt sind Polyester aus

30 bis 70 mol-%    Adipinsäure und

70 bis 30 mol-%    Phthalsäure, Terephthalsäure, Isophthalsäure und/oder Tetrahydrophthalsäure

und

90 bis 100 mol-%    Neopentylglykol und

10 bis 0 mol-%    Ethylenglykol oder Propylenglykol.

Grundsätzlich sind zwar alle gesättigten linearen Polyester geeignet; einige davon zeigen aber gewisse Nachteile. So führen Polyester, die allein auf Basis von Adipinsäure aufgebaut sind, zu Formteilen mit verhältnismäßig hohem Reststyrolgehalt, in manchen Fällen entstehen hierbei auch spröde Formteile. Bei Polyestern, die vorwiegend aus niedrigen Diolen aufgebaut sind, läßt oft die Hydrolysebeständigkeit zu wünschen übrig. Außerdem erhält man in vielen Fällen, insbesondere bei Kombination mit den besonders bevorzugten ungesättigten Polyestern aus Maleinsäure, Phthalsäure und Propylenglykol, keine hochwertige Formkörperoberfläche. Die gesättigten Polyester weisen bevorzugt eine Säurezahl von mindestens 15 mg KOH pro g Polymer auf.

Es hat sich gezeigt, daß besonders gute Ergebnisse bei der Schwundkompensation und der Formteiloberfläche dann erhalten werden, wenn die Verträglichkeit von ungesättigten und gesättigten Polyester optimal aufeinander abgestimmt ist, und wenn die Glastemperatur des gesättigten Polyesters unterhalb der Härtungstemperatur des Harzes liegt.

Das erfindungsgemäße Reaktionsharz weist vorzugsweise eine Viskosität von 100 bis 1 000, insbesondere von 200 bis 500 mPa•s, bei 23°C auf. Es liegt bei Raumtemperatur als klare oder höchstens leicht trübe, einphasige Flüssigkeit vor, die mehrere Monate lang gelagert werden kann. Kurz vor dem Einspritzen in die Form werden dem Harz Initiator und gegebenenfalls Beschleuniger zugesetzt, die bei Temperaturerhöhung die Vernetzung auslösen. Dabei tritt dann in der Nähe des Gelpunktes eine erste Trübung auf, da das vernetzende ungesättigte Polyesterharz und der gesättigte Polyester separate Phasen bilden. Mit fortschreitender Härtung treten im Formteil Schwundspannungen auf. Diese Spannungen lösen sich, wenn der gesättigte Polyester als weiche Phase unter Hohlraumbildung mechanisch nachgibt. Schwundkompensation besteht also in der Verteilung des makroskopischen Schwundes auf viele kleine Hohlräume. Elektronenmikroskopische Untersuchungen zeigen, daß es sich bei der morphologischen Struktur des gehärteten Formstoffs um eine "Perlstruktur" handelt.

Das erfindungsgemäße Reaktionsharz kann die üblichen Zusatzstoffe enthalten, wie z.B. innere Trennmittel, Inhibitoren und Beschleuniger.

Füllstoffe, wie Kreide, Quarz, Koalin oder Aluminiumoxidhydrat sollten in Mengen von weniger als 50 Gew.-%, bezogen auf das Harz, anwesend sein.

Geeignete Initiatoren sind die üblichen Peroxide, wie z.B. Methylethylketonperoxid, Acetylacetonperoxid, tert.-Butylperethylhexanoat, sowie Mischungen davon. Sie werden gewöhnlich in Mengen von 1 bis 4 Gew.-%, bezogen auf das Harz, zugesetzt. Gewöhnlich werden sie mit üblichen Cobaltbeschleunigern oder Aminbeschleunigern in Mengen von 0,05 bis 1 Gew.-%, bezogen auf das Harz, kombiniert.

Die erfindungsgemäß hergestellten Formteile finden insbesondere als Karrosserieteile in Kraftfahrzeugen Verwendung.

3

Beispiele und Experimente

A. Herstellung der ungesättigten Polyesterharze

Harz 1

4,0 mol Maleinsäureanhydrid, 0,15 g Hydrochinon, 2,0 mol Phthalsäureanhydrid und 6,3 mol Propylenglykol werden in einer 2 l-Glasapparatur mit Rührer, Stickstoffbegasung sowie Dephlegmator mit Dephlegmatorkopf, Kondensator und Kondensatvorlage auf 130°C erhitzt. Nach Abklingen der exothermen Reaktion heizt man mit 0,3°C/min auf 200°C auf und hält bei dieser Temperatur bis eine Säurezahl von 45 bis 48 mg KOH/g Polymer erreicht ist. Man kühlt auf 130°C ab und gibt 530 g Styrol zu.

Harz 2

Die Herstellung erfolgt genau wie bei Harz 1, jedoch unter Verwendung von 3,3 mol Propylenglykol und 3,0 mol Dipropylenglykol. Bei Erreichen einer Säurezahl von 25 bis 28 mg KOH/g Polymer wird der Ansatz auf 130°C abgekühlt und mit 635 g Styrol verdünnt.

Harz 3

2,0 mol Isophthalsäure, 2,5 mol Neopentylglykol und 0,7 mol Propylenglykol werden in der für Harz 1 beschriebenen Apparatur mit 0,3°C/min auf 200°C erhitzt. Sobald eine Säurezahl von 10 - 15 mg KOH/g Polymer erreicht ist, wird der Ansatz auf 130°C abgekühlt. Man gibt 1,0 mol Neopentylglykol, 0,14 g Hydrochinon und 2,0 mol Maleinsäureanhydrid zu und heizt mit 0,3°C/min auf 200°C auf. Beim Erreichen einer Säurezahl von 18 bis 22 mg KOH/g Polymer wird der Ansatz auf 130°C abgekühlt und mit 560 g Styrol verdünnt.

Harz 4

2,0 mol Terephthalsäuredimethylester, 3,0 mol Propylenglykol sowie 50 mg $Zn(OOCCH_3)_2 \cdot 2H_2O$ werden in der für Harz 1 beschriebenen Apparatur mit 0,3°C/min auf 200°C aufgeheizt. Nach Auffangen von ca. 115 g Methanol wird der Ansatz auf 130°C abgekühlt. Man gibt 1,2 mol Propylenglykol, 2,0 mol Maleinsäureanhydrid und 0,12 g Hydrochinon zu und heizt mit 0,3°C/min auf 200°C auf. Sobald eine Säurezahl von 16 bis 20 mg KOH/g Polymer erreicht wurde, wird der Ansatz auf 130°C abgekühlt und mit 400 g Styrol verdünnt.

B. Herstellung der gesättigten Polyester

Gesättigte Polyester, die 2 Dicarbonsäuren aufweisen, werden dann zweistufig hergestellt, wenn sie Isophthalsäure oder Terephthalsäure enthalten. Alle anderen Polyester werden einstufig hergestellt.

Beispiel für einen einstufig hergestellten Polyester (PE1):

4,0 mol Adipinsäure und 4,0 mol 1,4-Butandiol (streng stöchiometrische Einwaage!) werden unter einem Stickstoffstrom in der für Harz 1 beschriebenen Apparatur aufgeschmolzen und mit 0,3°C/min auf 220°C aufgeheizt. Nach Beendigung der Kondensation - für die einzelnen Produkte wurden unterschiedliche Abbruchkriterien (s. Tabelle 1) gewählt - wurde der Ansatz auf 130°C abgekühlt, mit 100 ppm Hydrochinon (bezogen auf die Masse der styrolischen Lösung) versetzt und anschließend mit Styrol so abgemischt, daß Lösungen mit einem Feststoffgehalt von 75 % vorliegen.

Die Polyester 2 - 19 (siehe Tabelle 1) und 27 - 29 (siehe Tabelle 2) wurden analog hergestellt.

Beispiel für einen zweistufig hergestellten Isophthalsäure-Polyester (PE 20):

1,2 mol Isophthalsäure und 4,0 mol Neopentylglykol werden in der 1. Stufe bei Temperaturen von 200°C umgesetzt, bis eine klare Lösung vorliegt (Apparatur, Stickstoffstrom und Aufheizrate wie bei Harz 1). In der 2. Stufe werden 2,8 mol Adipinsäure zugegeben und die Reaktion wird bis zum Erreichen der Abbruchkriterien fortgesetzt. Der Ansatz wird dann auf 130°C abgekühlt, mit 100 ppm Hydrochinon (bezogen auf die Masse der styrolischen Lösung) versetzt und anschließend mit Styrol so abgemischt, daß eine Lösung mit einem Feststoffgehalt von 75 % vorliegt. Die Polyester 21 - 23 und 30 - 32 (siehe Tabelle 2) wurden analog hergestellt.

Beispiel für einen zweistufig hergestellten Terephthalsäure-Polyester (PE 24):

1,2 mol Terephthalsäuredimethylester und 4,0 mol Neopentylglykol werden in der 1. Stufe bei 200°C in Gegenwart von $Zn(OOCCH_3)_2 \cdot 2H_2O$ (Menge 55 mg/kg Polyester) so lange umgeestert, bis kein Methanol mehr überging (Apparatur, Stickstoffstrom und Aufheizrate wie bei Harz 1). In der 2. Stufe werden 2,8 mol Adipinsäure zugegeben und die Reaktion wird bis zum Erreichen der Abbruchkriterien fortgesetzt. Der Ansatz wird dann auf 130°C abgekühlt, mit 100 ppm Hydrochinon (bezogen auf die Masse der styrolischen Lösung) versetzt und anschließend mit Styrol so abgemischt, daß eine Lösung mit einem Feststoffgehalt von 75 % vorliegt. Die Polyester 25, 26 und 33 - 35 (siehe Tabelle 2) wurden analog hergestellt.

C. Prüfung der Schwundkompensation

Aus den Harzen 1, 2, 3 und 4 und den gesättigten Polyestern PE1-PE35 wurden unter Styrolzugabe Mischungen mit folgender Zusammensetzung hergestellt:

| 40 Gew.-% | Ungesättigter Polyester styrolfrei, |
| 20 Gew.-% | gesättigter Polyester styrolfrei, |
| 40 Gew.-% | Styrol. |

100 Teile dieser Mischung wurden auf 2 verschiedene Weisen mit Acetylacetonperoxid (AAP) und einer Co-octoat-Lösung (1-proz. in Styrol, Abk.: Co-Beschl.) gemischt und unterschiedlich gehärtet:

a) 1 Gew.-% AAP + 1 Gew.-% Co.-Beschl.;     Härtung bei Raumtemperatur im Reagenzglas

b) 2 Gew.-% AAP + 0,2 Gew.-% Co.-Beschl.;     Injektion in eine Form und Härtung bei 80°C

Folgende Kombinationen härten in obiger Abmischung schwundfrei:

Harz 1 + PE1, Harz 1 + PE2, Harz 1 + PE3, Harz 1 + PE4, Harz 1 + PE7,

Harz 1 + PE9, Harz 1 + PE10, Harz 1 + PE11, Harz 1 + PE13,

Harz 1 + PE14, Harz 1 + PE15, Harz 1 + PE16, Harz 1 + PE18,

Harz 1 + PE19, Harz 1 + PE20, Harz 1 + PE21, Harz 1 + PE22,

Harz 1 + PE23, Harz 1 + PE24, Harz 1 + PE25, Harz 1 + PE26,

Harz 1 + PE27, Harz 1 + PE28, Harz 1 + PE29, Harz 1 + PE30,

Harz 1 + PE31, Harz 1 + PE32, Harz 1 + PE33, Harz 1 + PE34,

Harz 1 + PE35, Harz 2 + PE4, Harz 2 + PE8, Harz 3 + PE6,

Harz 3 + PE12, Harz 4 + PE3, Harz 4 + PE4, Harz 4 + PE5, Harz 4 + PE7.

Tabelle 1 Analytische Daten der gesättigten Polyester

| Nr. | Zusammensetzung | Säurezahl mg KOH / g Polymer | $OHZ_{sch}$ | Viskosität mPa*s | $M_n$(berechnet) g/mol | Aussehen der 75%igen styrolischen Lsg. |
|---|---|---|---|---|---|---|
| PE 1 | Adipinsäure/1,4-Butandiol | 23,3 | -13,1 | 610 | 3370 | Polymer krist. aus Lösg. |
| PE 2 | Adipinsäure/1,5-Pentandiol | 19,4 | 8 | 480 | 2400 | Polymer krist. aus Lösg. |
| PE 3 | Adipinsäure/1,6-Hexandiol | 17,6 | -2,3 | 450 | 3410 | Polymer krist. aus Lösg. |
| PE 4 | Adipinsäure/Neopentylglykol | 23,1 | -7,7 | 300 | 2900 | klar |
| PE 5 | Adipinsäure/HPN | 24,6 | -10,9 | 120 | 2930 | klar |
| PE 6 | Adipinsäure/TCDDM | 15,6 | 13,2 | 1280 | 2530 | trüb |
| PE 7 | THPS/1,4-Butandiol | 28,2 | -21,8 | 820 | 3240 | weiß |
| PE 8 | THPS/1,6-Hexandiol | 26,8 | -19,5 | 800 | 3290 | weiß |
| PE 9 | THPS/Dipropylenglykol | 26,8 | 4,2 | 250 | 1940 | weiß |
| PE 10 | THPS/1,4-CHDM | 21,8 | 8,2 | n. meßbar | 2170 | trüb |
| PE 11 | Isophthalsäure/1,5-Pentandiol | 45,2 | 17,3 | 1000 | 1040 | weiß |
| PE 12 | Isophthalsäure/1,6-Hexandiol | 23,4 | -0,7 | 3200 | 2430 | Polymer krist. aus Lösg. |
| PE 13 | Isophthalsäure/HPN | 52,7 | 20,3 | 980 | 890 | trüb |
| PE 14 | Isophthalsäure/TCDDM | 64,4 | 34,2 | n. meßbar | 690 | bräunlich |
| PE 15 | Terephthalsäure/HPN | – | 27,0 | 520 | – | klar |
| PE 16 | Terephthalsäure/TCDDM | – | 67,4 | 1200 | – | klar |

EP 0 512 294 A2

Tabelle 1 (Forts.)

| Nr. | Zusammensetzung | Säurezahl mg KOH / g | OHZ$_{Sch}$ Polymer | Viskosität mPa*s | M$_n$(berechnet) g/mol | Aussehen der 75%igen styrolischen Lsg. |
|---|---|---|---|---|---|---|
| PE 17 | Phthalsäure/1,4-Butandiol | 37,7 | -43,1 | 500 | 3470 | klar |
| PE 18 | Phthalsäure/1,5-Pentandiol | 16,3 | 16,2 | 480 | 2300 | klar |
| PE 19 | Phthalsäure/1,6-Hexandiol | 18,7 | 20,3 | 290 | 2140 | klar |

Abkürzungen HPN  Hydroxypivalinsäureneopentylglykolester   TCDDM  Tricyclodecandimethanol (techn. Isomerengemisch)

THPS 1,2,5,6-Tetrahydrophthalsäure   1,4-CHDM 1,4-Cyclohexandimethanol (30 % cis, 70 % trans)

EP 0 512 294 A2

Tabelle 2: Modifizierung von PE 4

| Nr. | Adipin-säure (mol) | THPS (mol) | Zusammensetzung Isophthal-säure (mol) | Terephthal-säure (mol) | Neopentyl-glykol (mol) | Säurezahl mg KOH/g | $OHZ_{sch}$ Polymer | Viskosität mPa·s | $M_n$(berechnet) g/mol | Aussehen der 75%igen Lösung in Styrol |
|---|---|---|---|---|---|---|---|---|---|---|
| PE20 | 0,7 | | 0,3 | | 1 | 25,2 | 1,3 | 540 | 2200 | trübe |
| PE21 | 0,6 | | 0,4 | | 1 | 25,9 | -4,8 | 680 | 2400 | trübe |
| PE22 | 0,5 | | 0,5 | | 1 | 26,1 | -5,8 | 820 | 2400 | trübe |
| PE23 | 0,4 | | 0,6 | | 1 | 27,1 | -1,5 | 860 | 2100 | weiß |
| PE24 | 0,7 | | | 0,3 | 1 | 22,4 | -5,5 | 650 | 2900 | klar |
| PE25 | 0,6 | | | 0,4 | 1 | 18,6 | 12,7 | 550 | 2200 | klar |
| PE26 | 0,5 | | | 0,5 | 1 | 26,2 | 6,4 | 710 | 1900 | weiß |
| PE27 | 0,5 | 0,5 | | | 1 | 29,8 | -14,7 | 540 | 2500 | klar |
| PE28 | 0,4 | 0,6 | | | 1 | 24,5 | -1,9 | 580 | 2400 | weiß |
| PE29 | 0,3 | 0,7 | | | 1 | 23,9 | -10,7 | 550 | 3000 | weiß |

Tabelle 2 (Fortsetzung)

| Nr. | Zusammensetzung | | | | | Säurezahl mg KOH/g Polymer | OHZsch | Viskosität mPa·s | $M_n$(berechnet) g/mol | Aussehen der 75%igen Lösung in Styrol |
| --- | --- | --- | --- | --- | --- | --- | --- | --- | --- | --- |
| | Adipinsäure (mol) | THPS (mol) | Isophthalsäure (mol) | Terephthalsäure (mol) | Neopentylglykol (mol) | | | | | |
| PE30 | 0,5 | 0,25 | 0,25 | | 1 | 24,9 | 7,6 | 520 | 2000 | klar |
| PE31 | 0,4 | 0,3 | 0,3 | | 1 | 23,7 | 7,4 | 520 | 2000 | trübe |
| PE32 | 0,3 | 0,35 | 0,35 | | 1 | 28,6 | 0,4 | 550 | 1900 | trübe |
| PE33 | 0,5 | 0,25 | | 0,25 | 1 | 29,1 | -0,3 | 520 | 1900 | klar |
| PE34 | 0,4 | 0,3 | | 0,3 | 1 | 29,0 | 6,1 | 530 | 1800 | trübe |
| PE35 | 0,3 | 0,35 | | 0,35 | 1 | 27,1 | 2,4 | 760 | 2000 | klar |

Meßgrößen:  Säurezahl  nach der Kondensation am reinen, styrolfreien Polyester gemessen.

OHZsch   scheinbare OH-Zahl, nach der Kondensation am reinen, styrolfreien Polyester gemessen.

Viskosität nach der Kondensation am reinen, styrolfreien Polyester bei 150°C mit Epprecht-Viskosimeter gemessen

$M_n$   aus der Endgruppensumme berechnetes Zahlenmittel des Molekulargewichtes.

Abkürzungen: THPS   1,2,3,6-Tetrahydrophthalsäure

## Patentansprüche

1. Verfahren zur Herstellung von faserverstärkten Formteilen, bei dem man in eine beheizbare Werkzeugform vorgeformte Fasermatten oder -gelege einlegt, die Form schließt, in die Form ein flüssiges, initiatorhaltiges Reaktionsharz einspritzt, die Polymerisation des Harzes bei Temperaturen zwischen 40 und 90°C einleitet und nach Beendigung der Polymerisation das fertige Formteil entnimmt, dadurch gekennzeichnet, daß das Reaktionsharz eine styrolische Lösung eines ungesättigten Polyesters ist, welches 5 bis 50 Gew.-% eines gesättigten Polyesters enthält.

2. Verfahren nach Anspruch 1, dadurch gekennzeichnet, daß der ungesättigte Polyester aus folgenden Molekülbausteinen aufgebaut ist:

    50 bis 90 mol-%    Maleinsäure,

    50 bis 10 mol-%    Phthalsäure, Terephthalsäure, Isophthalsäure oder Tetrahydrophthalsäure,

    O bis 20 mol-%    anderer Di-, Tri- und Tetracarbonsäuren

einerseits und

    50 bis 100 mol-%    Propylenglykol und/oder Neopentylglykol

    50 bis 0 mol-%    Ethylenglykol und/oder Diethylglykol und/oder Dipropylenglykol

    0 bis 20 mol-%    anderer Diole, Triole oder Tetraole

andererseits.

3. Verfahren nach Anspruch 1, dadurch gekennzeichnet, daß der gesättigte Polyester aus folgenden Molekülbausteinen aufgebaut ist:

    0 bis 100 mol-%    Adipinsäure und

    100 bis 0 mol-%    Phthalsäure, Terephthalsäure, Isophthalsäure und/oder Tetrahydrophthalsäure,

    0 bis 20 mol-%    anderer Di- und Tricarbonsäuren

einerseits und

    80 bis 100 %    eines Diols mit mehr als 3 Kohlenstoffatomen und

    20 bis 0 %    Ethylenglykol und/oder Propylenglykol

andererseits.

4. Verfahren nach Anspruch 1, dadurch gekennzeichnet, daß das Reaktionsharz eine Viskosität zwischen 100 und 1000 mPa•s bei 23°C hat.

5. Verfahren nach Anspruch 1, dadurch gekennzeichnet, daß der gesättigte Polyester eine Säurezahl von mindestens 15 hat.